(19) Europäisches Patentamt / European Patent Office / Office européen des brevets

(11) **EP 2 857 797 B1**

(12) **FASCICULE DE BREVET EUROPEEN**

(45) Date de publication et mention de la délivrance du brevet:
**02.01.2019 Bulletin 2019/01**

(51) Int Cl.:
***G01C 19/72*** *(2006.01)*

(21) Numéro de dépôt: **14187352.1**

(22) Date de dépôt: **01.10.2014**

(54) **Gyromètre optique passif résonant à trois faisceaux**

Passiver optischer Resonanz-Messkreisel mit drei Strahlen

Resonant passive optical rate gyro with three beams

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2013 FR 1302311**

(43) Date de publication de la demande:
**08.04.2015 Bulletin 2015/15**

(73) Titulaires:
- **Thales**
  **92400 Courbevoie (FR)**
- **Centre National de la Recherche Scientifique**
  **75016 Paris (FR)**

(72) Inventeurs:
- **Schwartz, Sylvain**
  **78470 Saint-Remy Les Chevreuse (FR)**
- **Feugnet, Gilles**
  **91120 Palaiseau (FR)**
- **Bretenaker, Fabien**
  **781410 Velizy Villacoublay (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
| | |
|---|---|
| EP-A1- 0 427 110 | EP-A2- 1 795 865 |
| EP-A2- 2 246 663 | EP-A2- 2 333 482 |
| US-A- 4 875 775 | US-A- 5 018 860 |
| US-A1- 2011 255 094 | US-B1- 6 259 089 |

EP 2 857 797 B1

**EP 2 857 797 B1**

**Description**

Le domaine de l'invention est celui des gyromètres optiques, utilisés notamment dans le domaine de la navigation inertielle dans le cadre d'applications aéronautiques embarquées. Plus précisément, le domaine de l'invention est celui des gyromètres optiques passifs résonnants.

Les gyromètres optiques reposent sur le principe de la mesure de l'effet Sagnac. Ce dernier induit, sous l'effet d'une rotation, une différence de temps de parcours entre deux signaux électromagnétiques se propageant dans des sens opposés le long d'un parcours en anneau. Cette différence de temps de parcours, proportionnelle à la vitesse angulaire du dispositif, peut être mesurée soit comme une différence de phase dans le cadre d'un montage interférométrique soit comme une différence de fréquence propre entre les deux modes contrarotatifs d'une cavité en anneau. Dans le premier cas, il est nécessaire d'utiliser une fibre optique pour maximiser la longueur de l'interféromètre et donc la sensibilité du dispositif. On parle alors de gyromètre interférométrique à fibre optique, connus sous l'acronyme « I-FOG ». Dans le deuxième cas, la différence entre les fréquences propres des modes de la cavité peut être mesurée de deux façons. La première consiste à utiliser une cavité active, c'est-à-dire contenant un milieu amplificateur et à mesurer la différence de fréquence entre les modes contrarotatifs émis par la cavité. On parle alors de gyrolaser ou « RLG », acronyme de « Ring Laser Gyro ». La seconde façon consiste à utiliser une cavité résonante passive et à venir sonder les fréquences propres des modes contrarotatifs à l'aide d'un laser. On parle alors de gyromètre passif résonant.

Le gyromètre passif résonnant possède un certain nombre d'avantages par rapport à ses concurrents. Par rapport au RLG, il s'affranchit notamment de la nécessité d'utiliser un milieu amplificateur gazeux et du système d'électrodes à haute tension qui lui est habituellement associé. Par rapport à l'I-FOG, il présente l'avantage d'un chemin optique beaucoup plus court qui permet d'obtenir une moindre sensibilité à l'environnement ainsi qu'une plus grande compacité. Enfin, il ne met en jeu que des composants standards. On évite ainsi, en particulier, l'emploi de source super-luminescente.

Toutefois, si ces trois types de gyromètres, I-FOG, RLG et gyromètre passif résonnant ont tous été démontrés expérimentalement, actuellement, seuls les deux premiers ont débouché sur des applications industrielles. Un frein au développement du gyromètre passif résonant est dû au problème de la rétrodiffusion de la lumière, qui crée des couplages entre modes contrarotatifs et dégrade les performances du système. Actuellement, ce problème n'a pas reçu de solution technique totalement satisfaisante. Le bruit résultant de l'interférence entre le signal utile et le signal rétro-réfléchi peut être partiellement filtré par une technique de modulation de phase. Toutefois, celle-ci ne résout en rien le problème du couplage entre modes contrarotatifs, qui crée une non-linéarité de la réponse en fréquence et entraîne une « zone aveugle » comme sur les gyrolasers traditionnels. De plus, le problème de la stabilité du facteur d'échelle n'est habituellement pas traité dans ce type de gyromètre.

Il a également été proposé des gyromètres passifs comportant un laser maître et des lasers esclaves. Les applications EP 1 795 865 et EP 2 333 482 décrivent des solutions de ce type.

Le gyromètre selon l'invention ne présente pas ces inconvénients. Il résout le problème du couplage entre les modes contrarotatifs lié à la rétrodiffusion, ainsi que celui de la stabilité du facteur d'échelle. La solution technique consiste à utiliser trois fréquences distinctes venant sonder trois modes distincts de la cavité, au lieu de deux modes dans les solutions de l'art antérieur.

Cela permet d'une part de s'affranchir de l'effet des couplages car les modes sont significativement séparés en fréquence, d'au moins un intervalle spectral libre, tout en ayant accès à chaque instant à la mesure de la rotation et de la longueur de cavité.

Plus précisément, l'invention a pour objet un gyromètre passif résonant comprenant un laser d'injection émettant un faisceau optique initial à une première fréquence et une cavité,
caractérisé en ce que le gyromètre comporte :

un séparateur optique permettant de diviser le faisceau optique initial en un premier faisceau optique, en un second faisceau optique et en un troisième faisceau optique, le premier faisceau étant injecté dans la cavité dans un premier sens, le second faisceau et le troisième faisceau optiques étant injectés dans la cavité dans le sens opposé ;

- un premier dispositif d'asservissement permettant d'asservir la première fréquence du premier faisceau optique à une première fréquence propre correspondant à un premier mode de résonance de la cavité ou d'asservir une première fréquence propre correspondant à un premier mode de résonance de la cavité à la première fréquence du premier faisceau optique ;
- un second dispositif d'asservissement permettant d'asservir la seconde fréquence du second faisceau optique à une seconde fréquence propre correspondant à un second mode de résonance de la cavité ;
- un troisième dispositif d'asservissement permettant d'asservir la troisième fréquence du troisième faisceau optique à une troisième fréquence propre correspondant à un troisième mode de résonance de la cavité, les trois fréquences propres étant toutes différentes entre elles ;
- des moyens de mesure d'une première différence de fréquence entre la première fréquence et la seconde fréquence et d'une seconde différence entre la seconde fréquence et la troisième fréquence, ces deux fréquences combinées entre elles étant représentatives de la longueur de la cavité et de la vitesse de rotation angulaire de la cavité selon un axe perpendiculaire au plan moyen de ladite cavité.

Avantageusement, le gyromètre comporte un premier photodétecteur agencé de façon à recevoir le premier faisceau optique après traversée de la cavité et un second photodétecteur agencé de façon à recevoir le second faisceau optique et le troisième faisceau optique après traversée de la cavité dans le sens opposé, le premier signal issu du premier photodétecteur étant envoyé dans le premier dispositif d'asservissement et le second signal issu du second photodétecteur étant envoyé dans le second dispositif d'asservissement et le troisième dispositif d'asservissement.

Avantageusement, chaque dispositif d'asservissement comporte au moins :

- un moyen de déphasage disposé à la sortie du premier photodétecteur ou du second photodétecteur ;
- un oscillateur fonctionnant à une fréquence d'oscillation prédéterminée ;
- un moyen de mixage des signaux issus de l'oscillateur et du moyen de déphasage ;
- une boucle d'asservissement délivrant un signal d'erreur fréquentielle à partir du signal issu du moyen de mixage ;
- un moyen de sommation du signal issu de la boucle d'asservissement et de l'oscillateur.

Avantageusement, le premier dispositif d'asservissement comporte un modulateur de phase ayant une fréquence de modulation prédéterminée et le second dispositif d'asservissement et le troisième dispositif d'asservissement comportent chacun un modulateur acousto-optique permettant de faire des changements de fréquence de la seconde fréquence et de la troisième fréquence.

Avantageusement, le second dispositif d'asservissement et le troisième dispositif d'asservissement comportent chacun un modulateur de phase permettant de faire des changements de fréquence de la seconde fréquence et de la troisième fréquence par modulation serrodyne.

Avantageusement, l'architecture du premier dispositif d'asservissement est de type « Pound Drever Hall » et le premier dispositif d'asservissement, le second dispositif d'asservissement et le troisième dispositif d'asservissement comportent une boucle d'asservissement de type « PID ».

Avantageusement, la cavité est partiellement ou totalement fibrée, et sa longueur est comprise entre quelques dizaines de centimètres et quelques mètres. Avantageusement, la cavité est une cavité à fibre optique creuse à cristaux photoniques.

Avantageusement, la cavité est un dispositif réalisé en optique intégrée. Plus précisément, la cavité est constituée d'un guide d'onde en optique intégrée.

Avantageusement, lorsque la vitesse de rotation angulaire du gyromètre est nulle, la première fréquence, la seconde fréquence et la troisième fréquence sont des multiples entiers de la fréquence de base égale à la célérité de la lumière divisée par la longueur de la cavité fibrée et la première différence de fréquence et la seconde différence de fréquence sont au moins égales à la dite fréquence de base.

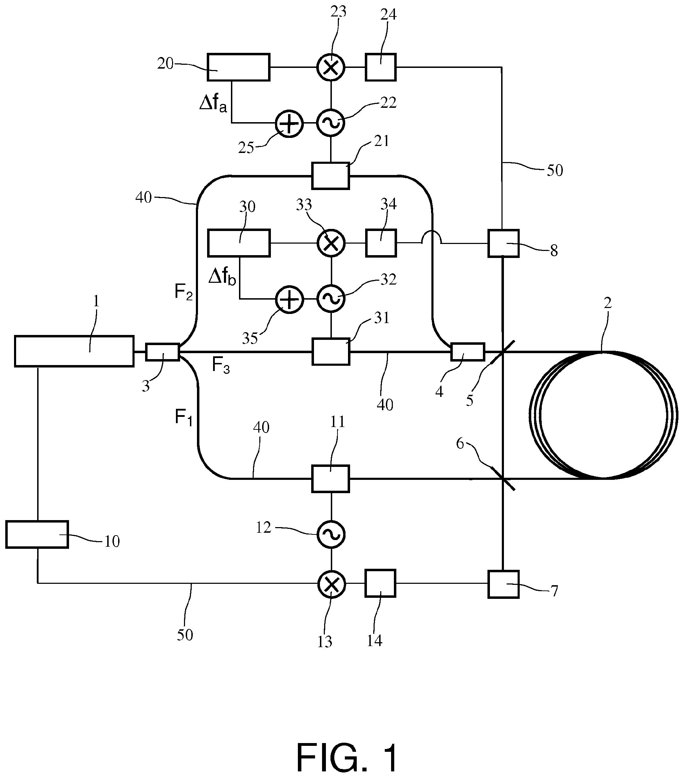

L'invention sera mieux comprise et d'autres avantages apparaîtront à la lecture de la description qui va suivre donnée à titre non limitatif et grâce à la figure 1 annexée qui représente un exemple de synoptique d'un gyromètre selon l'invention.

Le gyromètre passif résonant selon l'invention comporte une cavité en anneau et un laser que l'on divise en trois faisceaux de fréquence optique différente. A titre d'exemple, la cavité peut être constituée d'une fibre creuse pour limiter l'effet Kerr. Chaque fréquence est séparée des deux autres fréquences d'une valeur correspondant à un multiple entier de l'intervalle spectral libre de la cavité. L'intervalle spectral libre ISL de la cavité vaut classiquement :

$$ISL = c/L$$

c étant la vitesse de la lumière et L la longueur optique de la cavité en anneau

Le premier faisceau est asservi sur un mode de la cavité dans un sens de propagation et les deux autres sont asservis sur deux autres modes de la cavité correspondant au sens de propagation opposé. Il est à noter qu'il est également possible de réaliser l'asservissement inverse, c'est-à-dire d'asservir une première fréquence propre correspondant à un premier mode de résonance de la cavité à la première fréquence du premier faisceau optique.

La différence de fréquences des deux faisceaux se propageant dans le même sens donne accès à la longueur de la cavité, tandis que la différence de fréquence entre deux faisceaux contrarotatifs donne accès à la vitesse angulaire de l'ensemble. Les fréquences des trois faisceaux sont à chaque instant suffisamment éloignées pour que l'effet des couplages entre les faisceaux puisse être rendu inopérant.

En l'absence de rotation, chaque faisceau est asservi sur une fréquence propre différente de la cavité que l'on

note :

$f_1 = N_1.c/L$     pour le premier faisceau ;
$f_2 = N_2.c/L$     pour le second faisceau ;
$f_3 = N_3.c/L$     pour le troisième faisceau ;

avec $N_1$, $N_2$ et $N_3$ nombres entiers deux-à-deux différents et connus.

Les fréquences doivent être suffisamment proches pour que la différence entre les fréquences de chaque paire de faisceaux puisse être compatible de la bande passante d'une photodiode.

En présence d'une rotation, les fréquences propres se décalent d'une quantité $\Omega$ proportionnelle à la vitesse angulaire, ce qui donne :

$$f_1 = N_1.c/L + \Omega/2 \ ;$$

$$f_2 = N_2.c/L - \Omega/2 \ ;$$

$$f_3 = N_3.c/L - \Omega/2$$

On connaît alors à chaque instant la longueur de la cavité en mesurant la différence de fréquence $\Delta f_{2-3}$ entre les faisceaux se propageant dans le même sens, soit dans l'exemple ci-dessus :

$$L = \frac{(N_2 - N_3)}{\Delta f_{2-3}} \cdot c$$

On en déduit la vitesse de rotation en mesurant la différence de fréquence $\Delta f_{1-2}$ entre deux faisceaux se propageant en sens opposé, soit dans l'exemple ci-dessus :

$$\Omega = \Delta f_{1-2} - \Delta f_{2-3} \cdot \frac{(N_1 - N_2)}{(N_2 - N_3)}$$

A titre d'exemple non limitatif, la figure 1 représente un exemple de synoptique d'un gyromètre selon l'invention. Sur cette figure 1, on a représenté en traits gras les liaisons optiques par fibres optiques 40 et en traits plus fins les liaisons électriques 50. Le gyromètre comporte principalement :

- une source laser 1 ;
- une cavité laser fibrée 2 de longueur optique L. La longueur optique L de la cavité correspond à la somme de la partie fibrée en anneau et de la partie en espace libre définie par les miroirs 6 et 7. La fibre peut être une fibre creuse. La cavité peut également être une cavité à fibre creuse à cristaux photoniques. Il est à noter qu'il serait possible de réaliser la cavité optique en optique intégrée ;
- des moyens de séparation et de recombinaison optique 3, 4, 5 et 6 ;
- deux photodétecteurs 7 et 8 ;
- trois dispositifs d'asservissement ;
- des moyens de mesure non représentés sur la figure 1.

A titre d'exemple, le faisceau laser issu de la source laser 1 traverse un coupleur optique 3 qui forme de ce faisceau unique trois faisceaux notés F1, F2 et F3.

Le premier faisceau F1 est modulé en phase à l'aide d'un modulateur de phase noté 11 piloté sur la figure 1 par un oscillateur 12 fonctionnant à une fréquence d'oscillation prédéterminée.

Ce faisceau F1 est injecté dans la cavité via le miroir de couplage 6. La partie transmise du faisceau est injectée dans la partie fibrée de la cavité 2 dans le sens anti-horaire ou « CCW », acronyme de « Counter ClockWise ». Cette partie transmise traverse la partie fibrée de la cavité puis est réfléchie par le miroir de couplage 5, qui permet de refermer la cavité optique. Une partie du faisceau F1 est par ailleurs réfléchi, au moment de l'injection dans la cavité, vers la photodiode 7.

Le signal issu de la photodiode 7 est démodulé avec un ajustement de phase réalisé par le déphaseur 14 de façon à générer un signal dispersif s'annulant lorsque la fréquence optique $f_1$ du faisceau F1 est résonnante avec un mode de la cavité, selon les procédés classiques d'asservissement au sommet d'une courbe de résonance. Ce dernier signal est mixé par un dispositif 13 avec celui de l'oscillateur 12. Si la largeur fréquentielle de cavité n'est pas trop faible, typiquement supérieure à 1 MHz, la fréquence de modulation de cet oscillateur est choisie petite devant cette largeur. A l'opposé, si la largeur fréquentielle de la cavité est suffisamment faible, typiquement inférieure à 1 MHz, la fréquence de modulation est choisie grande devant la largeur de la cavité. On parle alors d'architecture d'asservissement de la fréquence du laser de type « Pound Drever Hall ». Cette technique est notamment décrite dans une publication de Drever, R. W. P. intitulée « Laser phase and frequency stabilization using an optical resonator » et publiée dans Appl Phys B 31, 97-105 (1983).

Le signal issu de l'oscillateur est ensuite envoyé dans une boucle d'asservissement 10. Cette boucle d'asservissement 10 peut être, à titre d'exemple, de type « PID », acronyme signifiant « Proportionnelle, Intégrale, Dérivée », allusion aux trois modes d'action sur le signal d'erreur de la boucle d'asservissement. Ce type d'asservissement est bien connu en automatique. Cette boucle 10 rétroagit sur le laser 1 de façon à maintenir le faisceau F1 à résonance avec le mode de la cavité. La fréquence du laser est alors asservie sur la valeur suivante, en tenant compte d'une éventuelle rotation à la vitesse angulaire $\Omega$ :

$$f_1 = N_1.c/L + \Omega/2 \qquad N_1 \text{ étant un nombre entier ;}$$

Le deuxième faisceau noté F2 sur la figure 1 passe à travers un modulateur acousto-optique ou « AOM » 21 destiné à décaler sa fréquence, puis est injecté dans la cavité via le coupleur optique 4 et le miroir de couplage 5. Il est également possible d'utiliser un modulateur de phase permettant de faire des changements de fréquence par modulation serrodyne.

La partie transmise du faisceau est injectée dans la partie fibrée de la cavité 2 dans le sens horaire ou « CW », acronyme de « ClockWise ». Cette partie transmise traverse la partie fibrée de la cavité puis est réfléchie par le miroir de couplage 6, qui permet de refermer la cavité optique. Une partie du faisceau F2 est par ailleurs réfléchi, au moment de l'injection dans la cavité, vers la photodiode 8. Le signal issu de la photodiode 8 passe également à travers un déphaseur 24. Ce dernier signal est mixé par un dispositif 23 avec celui de l'oscillateur 22 et entre dans la boucle d'asservissement 20. En l'absence de rotation, la valeur moyenne du décalage en fréquence, notée $\Delta f_a$ sur la figure 1, est choisie égale à l'intervalle spectral libre de la cavité qui vaut c/L. A cette valeur moyenne est également ajouté un signal de modulation issu de l'oscillateur 22 par l'additionneur 25 destiné à générer le signal permettant d'asservir via cette seconde boucle d'asservissement 20 cette valeur moyenne de façon à conserver la fréquence f2 du faisceau F2 à résonance avec le mode de la cavité considéré. La fréquence $f_2$ est alors asservie via $\Delta f_a$ sur un mode de cavité de fréquence propre. Cette fréquence $f_2$ vérifie, en tenant compte d'une éventuelle rotation à la vitesse angulaire $\Omega$ :

$$f_2 = (N_1+1).c/L - \Omega/2, \text{ soit encore } \Delta f_a = c/L - \Omega/2.$$

Un dispositif similaire à celui utilisé sur le faisceau F2 est utilisé pour introduire dans la cavité un troisième faisceau F3 également dans le sens horaire ou « CW » et asservir sa fréquence $f_3$ du faisceau F3 sur le mode de la cavité correspondant à la fréquence propre vérifiant :

$$f_3 = (N_1-1).c/L - \Omega/2$$

Le dispositif utilisé sur le parcours du faisceau F3 met également en oeuvre un modulateur 31, le coupleur 4 et les miroirs de couplage 5 et 6, la photodiode 8, l'oscillateur 32, les moyens de mixage 33 et d'addition 35, la boucle d'asservissement 30. Ainsi, en l'absence de rotation, le modulateur acousto-optique 31 du faisceau F3 décale sa fréquence $f_3$ de la valeur -c/L. Ce décalage devient en présence d'une rotation à la vitesse $\Omega$ :

$$\Delta f_b = -c/L - \Omega/2.$$

Connaissant la valeur des décalages $\Delta f_a$ et $\Delta f_b$ la mesure de la vitesse de rotation est donc donnée par la première équation simple :

$$\Omega = -(\Delta f_a + \Delta f_b)$$

tandis que la mesure de la longueur L de cavité est donnée par la seconde équation simple :

$$2c/L = \Delta f_a - \Delta f_b$$

A titre d'exemples, un gyromètre passif résonant selon l'invention a comme valeurs de paramètres principaux :

Cas d'une première réalisation du gyromètre utilisant des modulateurs acousto-optiques :

Longueur de la cavité : L = 3 m ou encore c/L = 100 MHz ;
Nombre de modes $N_1 = 2.10^6$ ; $N_2 = N_1 + 1$ et $N_3 = N_1 + 2$

Cas d'une seconde réalisation du gyromètre utilisant un modulateur de phase et des filtres optiques et travaillant dans la même gamme de fréquences optiques que le gyromètre précédent :

Longueur de la cavité : L = 30 cm ou encore c/L = 1 GHz ;
Nombre de modes $N_1 = 2.10^5$ ; $N_2 = N_1 + 20$ et $N_3 = N_1 - 20$

## Revendications

1. Gyromètre passif résonant comprenant un laser d'injection (1) émettant un faisceau optique initial à une première fréquence et une cavité (2), **caractérisé en ce que** le gyromètre comporte :

   - un séparateur optique (3) permettant de diviser le faisceau optique initial en un premier faisceau optique (F1), en un second faisceau optique (F2) et en un troisième faisceau optique (F3), le premier faisceau étant injecté dans la cavité dans un premier sens, le second faisceau et le troisième faisceau optiques étant injectés dans la cavité dans le sens opposé ;
   - un premier dispositif d'asservissement (10, 12, 13, 14) permettant d'asservir la première fréquence du premier faisceau optique à une première fréquence propre correspondant à un premier mode de résonance de la cavité ou d'asservir une première fréquence propre correspondant à un premier mode de résonance de la cavité à la première fréquence du premier faisceau optique ;
   - un second dispositif d'asservissement (20, 22, 23, 24, 25) permettant d'asservir la seconde fréquence du second faisceau optique à une seconde fréquence propre correspondant à un second mode de résonance de la cavité ;
   - un troisième dispositif d'asservissement (30, 32, 33, 34, 35) permettant d'asservir la troisième fréquence du troisième faisceau optique à une troisième fréquence propre correspondant à un troisième mode de résonance de la cavité, les trois fréquences propres étant toutes différentes entre elles ;
   - des moyens de mesure d'une première différence de fréquence entre la première fréquence et la seconde fréquence et d'une seconde différence entre la seconde fréquence et la troisième fréquence, ces deux fréquences combinées entre elles étant représentatives de la longueur de la cavité et de la vitesse de rotation angulaire de la cavité selon un axe perpendiculaire au plan moyen de ladite cavité.

2. Gyromètre passif résonant selon la revendication 1, **caractérisé en ce que** le gyromètre comporte un premier photodétecteur (7) agencé de façon à recevoir le premier faisceau optique après traversée de la cavité et un second photodétecteur (8) agencé de façon à recevoir le second faisceau optique et le troisième faisceau optique après traversée de la cavité dans le sens opposé, le premier signal issu du premier photodétecteur étant envoyé dans le premier dispositif d'asservissement et le second signal issu du second photodétecteur étant envoyé dans le second dispositif d'asservissement et le troisième dispositif d'asservissement.

3. Gyromètre passif résonant selon la revendication 2, **caractérisé en ce que** chaque dispositif d'asservissement comporte au moins :

   - un moyen de déphasage (14, 24, 34) disposé à la sortie du premier photodétecteur ou du second photodétecteur ;
- un oscillateur (12, 22, 32) fonctionnant à une fréquence d'oscillation prédéterminée ;
- un moyen de mixage (13, 23, 33) des signaux issus de l'oscillateur et du moyen de déphasage ;
- une boucle d'asservissement (10, 20, 30) délivrant un signal d'erreur fréquentielle à partir du signal issu du moyen de mixage ;
- un moyen de sommation (25, 35) du signal issu de la boucle d'asservissement et de l'oscillateur.

4. Gyromètre passif résonant selon la revendication 3, **caractérisé en ce que** le premier dispositif d'asservissement comporte un modulateur de phase (11) ayant une fréquence de modulation prédéterminée.

5. Gyromètre passif résonant selon la revendication 3, **caractérisé en ce que** le second dispositif d'asservissement et le troisième dispositif d'asservissement comportent chacun un modulateur acousto-optique (21, 31) permettant de faire des changements de fréquence de la seconde fréquence et de la troisième fréquence.

6. Gyromètre passif résonant selon la revendication 3, **caractérisé en ce que** le second dispositif d'asservissement et le troisième dispositif d'asservissement comportent chacun un modulateur de phase (21, 31) permettant de faire des changements de fréquence de la seconde fréquence et de la troisième fréquence par modulation serrodyne.

7. Gyromètre passif résonant selon la revendication 4, **caractérisé en ce que** l'architecture du premier dispositif d'asservissement est de type « Pound Drever Hall ».

8. Gyromètre passif résonant selon l'une des revendications précédentes, **caractérisé en ce que** le premier dispositif d'asservissement, le second dispositif d'asservissement et le troisième dispositif d'asservissement comportent une boucle d'asservissement de type « PID ».

9. Gyromètre passif résonant selon l'une des revendications précédentes, **caractérisé en ce que** la cavité (2) est une cavité à fibre optique.

10. Gyromètre passif résonant selon la revendication 9, **caractérisé en ce que** la cavité (2) est une cavité à fibre optique creuse à cristaux photoniques.

11. Gyromètre passif résonant selon l'une des revendications 9 à 10, **caractérisé en ce que** la longueur de la cavité fibrée est comprise entre quelques dizaines de centimètres et quelques mètres.

12. Gyromètre passif résonant selon l'une des revendications 1 à 8, **caractérisé en ce que** la cavité (2) est constituée d'un guide d'onde en optique intégrée.

13. Gyromètre passif résonant selon l'une des revendications 1 à 8, **caractérisé en ce que** la cavité (2) est un dispositif réalisé en optique intégrée.

14. Gyromètre passif résonant selon l'une des revendications précédentes, **caractérisé en ce que**, lorsque la vitesse de rotation angulaire du gyromètre est nulle, la première fréquence, la seconde fréquence et la troisième fréquence sont des multiples entiers de la fréquence de base égale à la célérité de la lumière divisée par la longueur de la cavité et la première différence de fréquence et la seconde différence de fréquence sont au moins égale à la dite fréquence de base.

**Patentansprüche**

1. Passives Resonanzgyrometer, das einen Injektionslaser (1) umfasst, der einen optischen Anfangsstrahl mit einer ersten Frequenz und einem Hohlraum (2) emittiert, **dadurch gekennzeichnet, dass** das Gyrometer Folgendes umfasst:

   - einen optischen Separator (3), der es zulässt, den optischen Anfangsstrahl in einen ersten optischen Strahl (F1), einen zweiten optischen Strahl (F2) und einen dritten optischen Strahl (F3) zu unterteilen, wobei der erste Strahl in einer ersten Richtung in den Hohlraum injiziert wird, der zweite optische Strahl und der dritte optische Strahl in der entgegengesetzten Richtung in den Hohlraum injiziert werden;
   - eine erste Regelvorrichtung (10, 12, 13, 14), die es zulässt, die erste Frequenz des ersten optischen Strahls auf eine erste Eigenfrequenz entsprechend einer ersten Resonanzmode des Hohlraums zu regeln oder eine erste Eigenfrequenz entsprechend einer ersten Resonanzmode des Hohlraums auf die erste Frequenz des ersten optischen Strahls zu regeln;
- eine zweite Regelvorrichtung (20, 22, 23, 24, 25), die es zulässt, die zweite Frequenz des zweiten optischen Strahls auf eine zweite Eigenfrequenz entsprechend einer zweiten Resonanzmode des Hohlraums zu regeln;
- eine dritte Regelvorrichtung (30, 32, 33, 34, 35), die es zulässt, die dritte Frequenz des dritten optischen Strahls auf eine dritte Eigenfrequenz entsprechend einer dritten Resonanzmode des Hohlraums zu regeln, wobei sich alle drei Eigenfrequenzen voneinander unterscheiden;
- Mittel zum Messen einer ersten Frequenzdifferenz zwischen der ersten Frequenz und der zweiten Frequenz und einer zweiten Differenz zwischen der zweiten Frequenz und der dritten Frequenz, wobei diese beiden miteinander kombinierten Frequenzen die Länge des Hohlraums und die Winkelrotationsgeschwindigkeit des Hohlraums gemäß einer Achse lotrecht zur mittleren Ebene des Hohlraums repräsentieren.

2. Passives Resonanzgyrometer nach Anspruch 1, **dadurch gekennzeichnet, dass** das Gyrometer einen ersten Fotodetektor (7) umfasst, so angeordnet, dass er den ersten optischen Strahl nach dem Durchqueren des Hohlraums empfängt, und einen zweiten Fotodetektor (8), so angeordnet, dass er den zweiten optischen Strahl und den dritten optischen Strahl nach dem Durchqueren des Hohlraums in der entgegengesetzten Richtung empfängt, wobei das erste vom ersten Fotodetektor ausgegebene Signal in der ersten Regelvorrichtung gesendet wird und das zweite vom zweiten Fotodetektor kommende Signal in der zweiten Regelvorrichtung und der dritten Regelvorrichtung gesendet wird.

3. Passives Resonanzgyrometer nach Anspruch 2, **dadurch gekennzeichnet, dass** jede Regelvorrichtung wenigstens Folgendes umfasst:

 - ein Phasenverschiebungsmittel (14, 24, 34), angeordnet am Ausgang des ersten Fotodetektors oder des zweiten Fotodetektors;
 - einen Oszillator (12, 22, 32), der mit einer vorbestimmten Oszillationsfrequenz arbeitet;
 - ein Mittel (13, 23, 33) zum Mischen der vom Oszillator und dem Phasenverschiebungsmittel kommenden Signale;
 - einen Regelkreis (10, 20, 30), der ein Frequenzfehlersignal auf der Basis des von dem Mischmittel kommenden Signals liefert;
 - ein Mittel (25, 35) zum Addieren des von dem Regelkreis und dem Oszillator kommenden Signals.

4. Passives Resonanzgyrometer nach Anspruch 3, **dadurch gekennzeichnet, dass** die erste Regelvorrichtung einen Phasenmodulator (11) mit einer vorbestimmten Modulationsfrequenz umfasst.

5. Passives Resonanzgyrometer nach Anspruch 3, **dadurch gekennzeichnet, dass** die zweite Regelvorrichtung und die dritte Regelvorrichtung jeweils einen akustooptischen Modulator (21, 31) umfassen, mit dem Frequenzänderungen der zweiten Frequenz und der dritten Frequenz vorgenommen werden können.

6. Passives Resonanzgyrometer nach Anspruch 3, **dadurch gekennzeichnet, dass** die zweite Regelvorrichtung und die dritte Regelvorrichtung jeweils einen Phasenmodulator (21, 31) umfassen, mit dem Frequenzänderungen der zweiten Frequenz und der dritten Frequenz durch Serrodyn-Modulation vorgenommen werden können.

7. Passives Resonanzgyrometer nach Anspruch 4, **dadurch gekennzeichnet, dass** die Architektur der ersten Regelvorrichtung vom Typ "Pound Drever Hall" ist.

8. Passives Resonanzgyrometer nach einem der vorherigen Ansprüche, **dadurch gekennzeichnet, dass** die erste Regelvorrichtung, die zweite Regelvorrichtung und die dritte Regelvorrichtung einen Regelkreis des "PID"-Typs umfassen.

9. Passives Resonanzgyrometer nach einem der vorherigen Ansprüche, **dadurch gekennzeichnet, dass** der Hohlraum (2) ein Faseroptikhohlraum ist.

10. Passives Resonanzgyrometer nach Anspruch 9, **dadurch gekennzeichnet, dass** der Hohlraum (2) ein hohler Faseroptikhohlraum mit photonischen Kristallen ist.

11. Passives Resonanzgyrometer nach einem der Ansprüche 9 bis 10, **dadurch gekennzeichnet, dass** die Länge des Faserhohlraums zwischen mehreren zehn Zentimetern und mehreren Metern liegt.

12. Passives Resonanzgyrometer nach einem der Ansprüche 1 bis 8, **dadurch gekennzeichnet, dass** der Hohlraum (2) von einem Wellenleiter in integrierter Optik gebildet wird.

13. Passives Resonanzgyrometer nach einem der Ansprüche 1 bis 8, **dadurch gekennzeichnet, dass** der Hohlraum (2) eine in integrierter Optik realisierte Vorrichtung ist.

14. Passives Resonanzgyrometer nach einem der vorherigen Ansprüche, **dadurch gekennzeichnet, dass**, wenn die Winkelrotationsgeschwindigkeit des Gyrometers null ist, die erste Frequenz, die zweite Frequenz und die dritte Frequenz ganzzahlige Vielfache der Basisfrequenz gleich der Lichtgeschwindigkeit dividiert durch die Länge des Hohlraums sind und die erste Frequenzdifferenz und die zweite Frequenzdifferenz wenigstens gleich der Basisfrequenz sind.

**Claims**

1. Passive resonator gyro comprising an injection laser (1) emitting an initial optical beam at a first frequency and a cavity (2),

   **characterized in that** the gyro includes:

   - an optical splitter (3) making it possible to divide the initial optical beam into a first optical beam (F1), into a second optical beam (F2) and into a third optical beam (F3), the first beam being injected into the cavity in a first direction, the second and third optical beams being injected into the cavity in the opposite direction;
   - a first slaving device (10, 12, 13, 14) making it possible to slave the first frequency of the first optical beam to a first proper frequency corresponding to a first mode of resonance of the cavity or to slave a first proper frequency corresponding to a first mode of resonance of the cavity to the first frequency of the first optical beam;
   - a second slaving device (20, 22, 23, 24, 25) making it possible to slave the second frequency of the second optical beam to a second proper frequency corresponding to a second mode of resonance of the cavity;
   - a third slaving device (30, 32, 33, 34, 35) making it possible to slave the third frequency of the third optical beam to a third proper frequency corresponding to a third mode of resonance of the cavity, the three proper frequencies being all different from each other;
   - means for measuring a first frequency difference between the first frequency and the second frequency and for measuring a second difference between the second frequency and the third frequency, these two frequencies combined together being representative of the length of the cavity and the angular rotational velocity of the cavity according to an axis perpendicular to the median plane of said cavity.

2. Passive resonator gyro according to Claim 1, **characterized in that** the gyro includes a first photodetector (7) arranged so as to receive the first optical beam after crossing the cavity and a second photodetector (8) arranged so as to receive the second optical beam and the third optical beam after crossing the cavity in the opposite direction, the first signal output by the first photodetector being sent in the first slaving device and the second signal output by the second photodetector being sent in the second slaving device and the third slaving device.

3. Passive resonator gyro according to Claim 2, **characterized in that** each slaving device includes at least:

   - a phase shifting means (14, 24, 34) arranged at the output of the first photodetector or of the second photodetector ;
   - an oscillator (12, 22, 32) running at a predetermined oscillation frequency;
   - a means (13, 23, 33) for mixing the signals output by the oscillator and by the phase shifting means;
   - a control loop (10, 20, 30) delivering a frequency error signal based on the signal output by the mixing means;
   - a means (25, 35) for summing the signal output by the control loop and by the oscillator.

4. Passive resonator gyro according to Claim 3, **characterized in that** the first slaving device includes a phase modulator (11) having a predetermined modulation frequency.

5. Passive resonator gyro according to Claim 3, **characterized in that** the second slaving device and the third slaving device each include an acousto-optical modulator (21, 31) making it possible to make frequency changes to the second frequency and the third frequency.

6. Passive resonator gyro according to Claim 3, **characterized in that** the second slaving device and the third slaving device each include a phase modulator (21, 31) making it possible to make frequency changes to the second frequency and the third frequency by serrodyne modulation.

7. Passive resonator gyro according to Claim 4, **characterized in that** the architecture of the first slaving device is of Pound Drever Hall type.

8. Passive resonator gyro according to one of the preceding claims, **characterized in that** the first slaving device, the second slaving device and the third slaving device include a control loop of PID type.

9. Passive resonator gyro according to one of the preceding claims, **characterized in that** the cavity (2) is a fibre optic cavity.

10. Passive resonator gyro according to Claim 9, **characterized in that** the cavity (2) is a hollow-core photonic crystal fibre cavity.

11. Passive resonator gyro according to one of Claims 9 to 10, **characterized in that** the length of the fibre cavity is between a few tens of centimetres and a few metres.

12. Passive resonator gyro according to one of Claims 1 to 8, **characterized in that** the cavity (2) is composed of an integrated optics waveguide.

13. Passive resonator gyro according to one of Claims 1 to 8, **characterized in that** the cavity (2) is an integrated-optics device.

14. Passive resonator gyro according to one of the preceding claims, **characterized in that**, when the angular rotational velocity of the gyro is zero, the first frequency, the second frequency and the third frequency are integer multiples of the base frequency equal to the speed of light divided by the length of the cavity and the first frequency difference and the second frequency difference are at least equal to said base frequency.

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1795865 A

- EP 2333482 A

**Littérature non-brevet citée dans la description**

- **DREVER, R. W. P.** Laser phase and frequency stabilization using an optical resonator. *Appl Phys B,* 1983, vol. 31, 97-105